# FASCICULE DE BREVET EUROPEEN

(11) **EP 3 078 045 B1**
(45) Date de publication et mention de la délivrance du brevet: **20.06.2018**
(21) Numéro de dépôt: 14814958.6
(22) Date de dépôt: 26.11.2014
(51) Int. Cl.: H01H 9/22, B60L 3/04, H01H 19/46, H01H 51/27, H01H 50/54, H01H 19/635

(54) **DISPOSITIF DE COUPURE ELECTRIQUE POUR BATTERIE D'ACCUMULATEURS**
ELEKTRISCHE ABSCHALTVORRICHTUNG FÜR AKKUMULATOREN
ELECTRICAL CUT-OFF DEVICE FOR ACCUMULATOR BATTERIES

(30) Priorité: 02.12.2013 FR 1361957
(43) Date de publication de la demande: 12.10.2016
(73) Titulaire: Viatemis, 03410 Saint Victor (FR)
(72) Inventeur: NOËLLAT, Christophe, 98859 Koné (NC)
(74) Mandataire: Jacobacci Coralis Harle
(86) Numéro de dépôt international: PCT/FR2014/053042
(87) Numéro de publication internationale: WO 2015/082804

(56) Documents cités:
- EP-A1- 2 521 150
- GB-A- 2 246 240
- US-A- 4 220 937

## Description

### DOMAINE TECHNIQUE AUQUEL SE RAPPORTE L'INVENTION

La présente invention concerne de manière générale un dispositif permettant d'isoler une batterie d'accumulateurs des différents organes auxquels cette batterie d'accumulateurs est connectée.

Elle concerne plus particulièrement un dispositif de coupure électrique comportant :
- deux bornes fixes de connexion électrique,
- un pont mobile qui est mobile entre une position de fermeture du contact électrique entre les bornes fixes et une position d'ouverture du contact électrique entre les bornes fixes,
- un système de commande électromagnétique qui est adapté à être piloté entre un état ouvert dans lequel il commande le placement du pont mobile en position d'ouverture et un état fermé dans lequel il commande le placement du pont mobile en position de fermeture, et
- des moyens de manoeuvre manuelle qui sont manoeuvrables entre, d'une part, une position fonctionnelle dans laquelle ils laissent le pont mobile libre de se déplacer entre ses positions d'ouverture et de fermeture en fonction de l'état ouvert ou fermé du système de commande électromagnétique, et, d'autre part, une position d'ouverture forcée dans laquelle ils maintiennent le pont mobile à distance des deux bornes fixes quel que soit l'état ouvert ou fermé du système de commande électromagnétique.

Elle trouve une application particulièrement avantageuse dans la réalisation de coupe-circuit pour véhicules automobiles, notamment pour camions et bateaux.

### ARRIERE-PLAN TECHNOLOGIQUE

On connaît notamment du document EP2521150 un dispositif de coupure électrique tel que précité.

Dans ce document, le dispositif de coupure est décrit comme comportant deux paires de bornes fixes, et deux systèmes de commande électromagnétique couplés à deux ponts mobiles pour ouvrir ou fermer le contact entre les bornes fixes des deux paires de bornes.

Ces deux systèmes de commande électromagnétique permettent ainsi de commander automatiquement l'ouverture et la fermeture du contact électrique entre les bornes fixes de chaque paire de bornes, sans intervention manuelle.

En cas d'intervention sur la batterie d'accumulateurs ou sur l'un des organes auxquels cette batterie est connectée, les moyens de manoeuvre manuelle de ce dispositif de coupure permettent d'assurer le maintien des ponts mobiles à distance des bornes fixes, quel que soit l'état des systèmes de commande électromagnétique. L'intervention sur la batterie d'accumulateurs ou sur l'un des organes auxquels elle est connectée peut alors se faire sans risque.

Les moyens de manoeuvre manuelle comportent à cet effet une poignée permettant, via un dispositif de cames, de pousser les ponts mobiles à distance des bornes fixes.

Un tel dispositif de coupure est généralement embarqué dans un véhicule automobile.

Il peut arriver qu'une panne électrique affecte le circuit électrique du dispositif de coupure ou celui du véhicule automobile.

Si, au moment où intervient cette panne, les ponts mobiles sont en position d'ouverture, à distance des bornes fixes, le conducteur du véhicule ne disposera alors d'aucun moyen pour fermer le contact électrique entre les bornes fixes.

Il ne pourra donc plus redémarrer le moteur de son véhicule.

### OBJET DE L'INVENTION

Afin de remédier à cet inconvénient, la présente invention propose une solution permettant de forcer manuellement, lorsque cela s'avère nécessaire, la fermeture du contact électrique entre les bornes fixes.

Plus particulièrement, on propose selon l'invention un dispositif de coupure tel que défini dans la revendication 1.

Ainsi, grâce à l'invention, en cas de problème, l'utilisateur peut forcer le pont mobile à connecter les deux bornes fixes. Ainsi, le dispositif de coupure peut établir une connexion électrique entre, par exemple, une batterie d'accumulateurs et des systèmes de secours (typiquement une balise d'alerte).

On comprend que l'utilisation des moyens de manoeuvre manuelle pour assurer cette nouvelle fonction est avantageuse, en ce sens que le coût de fabrication du dispositif de coupure n'est pas affecté par l'intégration de cette nouvelle fonction.

D'autres caractéristiques avantageuses et non limitatives du dispositif de coupure conforme à l'invention sont définies en revendications 2 et suivantes.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un dispositif de coupure conforme à l'invention,
- la figure 2 est une vue schématique en perspective du dispositif de coupure de la figure 1, sur laquelle le boîtier du dispositif de coupure est coupé,
- les figures 3 et 4 sont des vues schématiques en perspective du dispositif de coupure de la figure 1, coupées selon deux plans de coupe différents,
- la figure 5 est une vue schématique de côté du dispositif de coupure de la figure 1, sur laquelle le boîtier du dispositif de coupure n'est pas représenté,
- la figure 6 est une vue développée d'un profil de came des moyens de manoeuvre manuelle du dispositif de coupure de la figure 1,
- les figures 7 à 10 sont des vues schématiques de côté du dispositif de coupure de la figure 1, représenté dans quatre états différents, sur lesquelles le boîtier du dispositif de coupure n'est pas représenté,
- les figures 11 à 13 sont des vues schématiques de dessus du dispositif de coupure de la figure 1, sur lesquelles la poignée est respectivement représentée en position de fermeture forcée, en position fonctionnelle, et en position d'ouverture forcée.

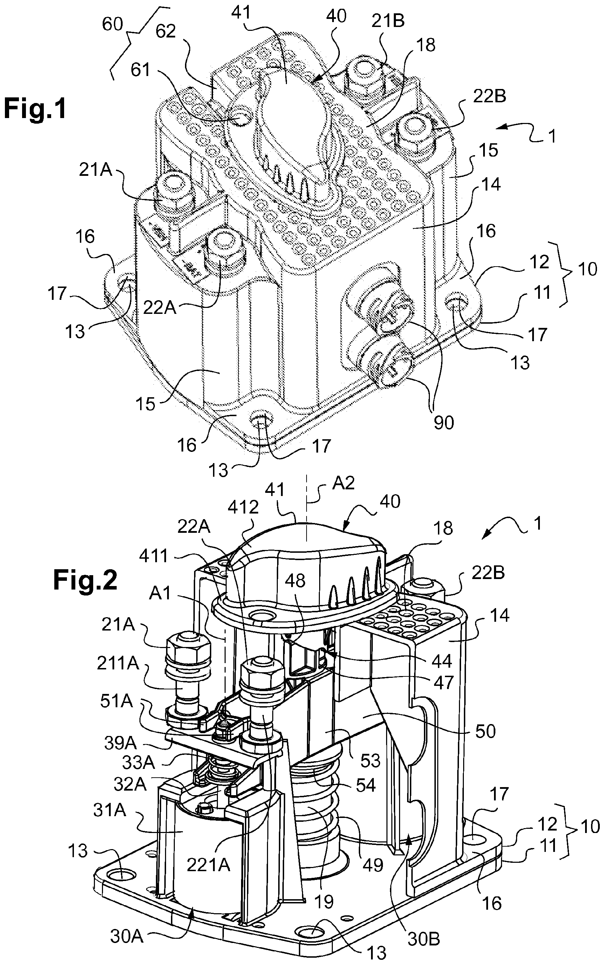

Sur la figure 1, on a représenté un dispositif de coupure 1.

Il s'agit ici d'un coupe-circuit 1 pour véhicule automobile, qui permet d'isoler si nécessaire une batterie d'accumulateurs des différents organes électriques auxquels cette batterie d'accumulateurs est connectée.

Ce coupe-circuit 1 comprend un boîtier 10 duquel émergent au moins deux bornes fixes 21A, 22A de connexion électrique, dont l'une est prévue pour être connectée à la batterie d'accumulateurs et dont l'autre est prévue pour être connectée aux organes électriques du véhicule automobile.

Comme le montre la figure 2, ce coupe-circuit 1 comporte également des moyens de connexion et déconnexion 30A des deux bornes fixes 21A, 22A.

Ces moyens de connexion et déconnexion 30A comportent un pont mobile 39A qui est mobile entre :
- une position de fermeture dans laquelle il est au contact des bornes fixes 21A, 22A pour établir un contact électrique entre les bornes fixes 21A, 22A, et
- une position d'ouverture dans laquelle il est à distance des bornes fixes 21A, 22A pour ouvrir le contact électrique entre les bornes fixes 21A, 22A.

Ils comportent également un système de commande électromagnétique 31A qui est prévu pour déplacer automatiquement (c'est-à-dire sans intervention manuelle sur le coupe-circuit 1) le pont mobile 39A entre sa position de fermeture et sa position d'ouverture.

Ce système de commande électromagnétique 31A est à cet effet adapté à être piloté entre un état ouvert dans lequel il commande le placement du pont mobile 39A en position d'ouverture et un état fermé dans lequel il commande le placement du pont mobile 39A en position de fermeture.

Ce système de commande électromagnétique 31A est prévu de telle sorte que, lorsqu'il est à l'état fermé, il exerce un effort F1 sur le pont mobile 39A pour le plaquer au contact des bornes fixes 21A, 22A. Il est également prévu de telle manière que si un effort F2 de direction opposée et d'intensité supérieure à l'effort F1 était exercé sur le pont mobile 39A, ce dernier serait repoussé à distance des bornes fixes 21A, 22A.

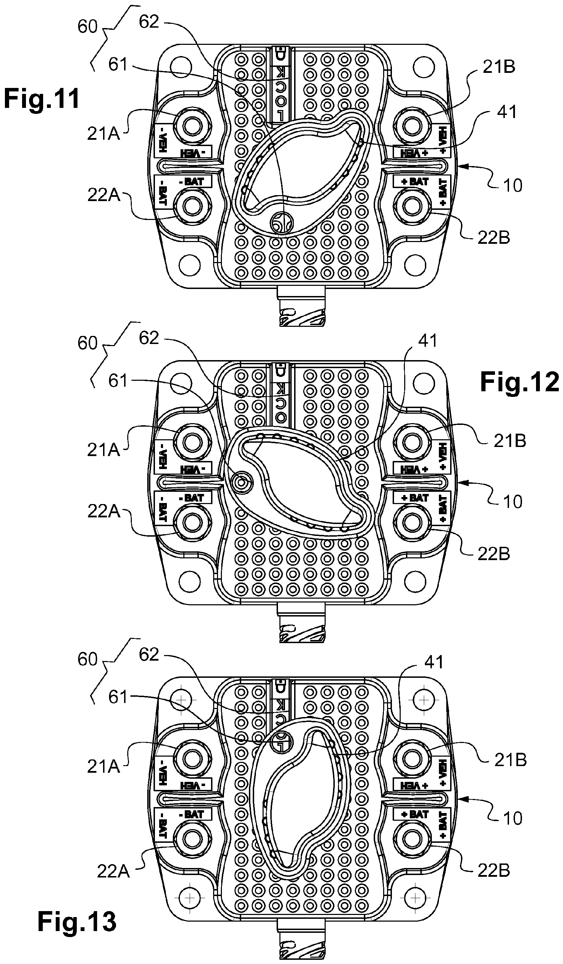

Le coupe-circuit 1 comporte par ailleurs des moyens de manoeuvre manuelle 40 qui sont manoeuvrables entre une position fonctionnelle (figure 12) et une position d'ouverture forcée (figure 13).

Lorsque les moyens de manoeuvre manuelle 40 sont en position fonctionnelle, ils laissent libre le pont mobile 39A, 39B dont la position dépend alors uniquement de l'état du système de commande électromagnétique 31A. Ainsi, lorsque le système de commande électromagnétique 31A est à l'état ouvert, le pont mobile 39A se positionne automatiquement en position d'ouverture, et lorsque le système de commande électromagnétique 31A est à l'état fermé, le pont mobile 39A se positionne automatiquement en position de fermeture.

En revanche, lorsqu'ils sont en position d'ouverture forcée, les moyens de manoeuvre manuelle 40 sont conçus pour maintenir le pont mobile 39A à distance des deux bornes fixes 21A, 22A, quel que soit l'état ouvert ou fermé du système de commande électromagnétique 31A.

Autrement formulé, lorsqu'ils sont placés en position d'ouverture forcée, ces moyens de manoeuvre manuelle 40 sont adaptés à exercer sur le pont mobile 39A, un effort F2 de direction opposée et d'intensité supérieure à l'effort F1.

Ils permettent donc d'isoler électriquement la batterie d'accumulateurs, quel que soit l'état ouvert ou fermé du système de commande électromagnétique 31A.

Ici, le système de commande électromagnétique 31A est par ailleurs prévu de telle sorte que, lorsqu'il est à l'état ouvert, il exerce un effort F3 pour maintenir le pont mobile 39A à distance des bornes fixes 21A, 22A. Il est également prévu de telle manière que si un effort F4 de direction opposée et d'intensité supérieure à l'effort F3 était exercé sur le pont mobile 39A, ce dernier serait repoussé au contact des bornes fixes 21A, 22A.

Selon une caractéristique particulièrement avantageuse de l'invention, les moyens de manoeuvre manuelle 40 sont alors manoeuvrables vers une position de fermeture forcée (figure 11) dans laquelle ils maintiennent (ou bloquent) le pont mobile 39A au contact des deux bornes fixes 21A, 22A, quel que soit l'état ouvert ou fermé du système de commande électromagnétique 31A.

Autrement formulé, lorsqu'ils sont placés en position de fermeture forcée, ces moyens de manoeuvre manuelle 40 sont adaptés à exercer sur le pont mobile 39A un effort F4 de direction opposée et d'intensité supérieure à l'effort F3.

Ils permettent donc de forcer la connexion de la batterie d'accumulateurs aux organes électriques du véhicule automobile, quel que soit l'état ouvert ou fermé du système de commande électromagnétique 31A.

Comme le montrent les figures 1 et 2, dans le mode de réalisation ici représenté, le boîtier 10 est réalisé en deux parties, dont un socle 11 et un capot 12.

Le socle 11 présente une forme de plaque rectangulaire, percée à ses quatre coins de quatre ouvertures 13.

Le capot 12 présente une forme de boîte ouverte du côté du socle 11 pour délimiter avec celui-ci un logement. Elle comporte ainsi une paroi frontale 18 bordée d'un côté par une paroi latérale.

Dans la suite de la description, les termes « avant » et « arrière » seront utilisés par rapport au socle 11 et au capot 12, le socle 11 étant considéré comme positionné à l'arrière du capot 12. Dans l'exemple représenté sur les figures où le socle 11 est positionné horizontalement et où le capot 12 est rapporté par-dessus le socle 11, l'avant d'un élément désignera le côté de cet élément qui est tourné vers le haut et l'arrière désignera le côté de cet élément qui est tourné vers le bas.

Le capot 12 comporte plus précisément une partie centrale 14 parallélépipédique qui héberge les moyens de manoeuvre manuelle 40, flanquée de deux parties latérales 15 qui hébergent chacune des moyens de connexion et déconnexion 30A, 30B.

Pour sa fixation au châssis du véhicule automobile, le capot 12 comporte, aux quatre coins de son bord arrière, quatre oreilles 16 chacune percées d'une ouverture 17 qui se place dans l'axe de l'une des ouvertures 13 du socle 11.

Ces ouvertures 13, 17 coaxiales permettent alors le passage de quatre vis de fixation du capot 12 et du support 11 au châssis du véhicule automobile.

Ici, le capot 12 et le support 11 comportent des moyens permettant de les fixer l'un à l'autre. Ces moyens se présentent ici sous la forme de vis engagées par l'arrière du support 11, dont les têtes prennent appui sur le support 11 et dont les corps filetés sont vissés dans le capot 12.

Comme le montre la figure 1, le coupe-circuit 1 comporte ici quatre bornes fixes 21A, 22A, 21B, 22B.

Une première paire de bornes fixes 21A, 22A est prévue pour être connectée entre la borne négative de la batterie d'accumulateurs et la borne négative des organes électriques du véhicule.

Une seconde paire de bornes fixes 21B, 22B est prévue pour être connectée entre la borne positive de la batterie d'accumulateurs et la borne positive des organes électriques du véhicule.

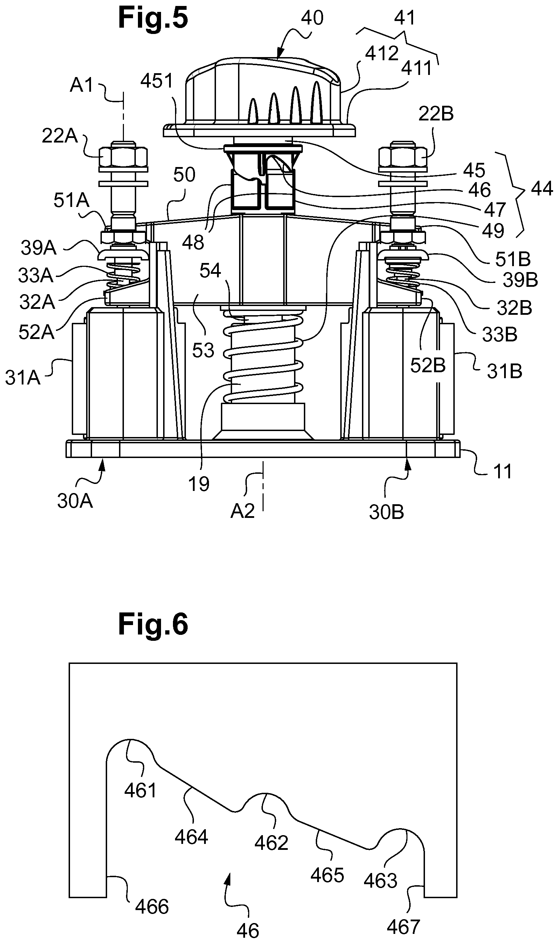

Ces deux paires de bornes sont désignées à l'aide des lettres « A » et « B ». Elles sont identiques et sont connectées ou déconnectées par des moyens de connexion et déconnexion 30A, 30B identiques (voir figure 5). Par conséquent, pour plus de clarté dans la suite de cet exposé, nous ne décrirons que la première paire de bornes fixes 21A, 22A et que les moyens de connexion et déconnexion 30A correspondants.

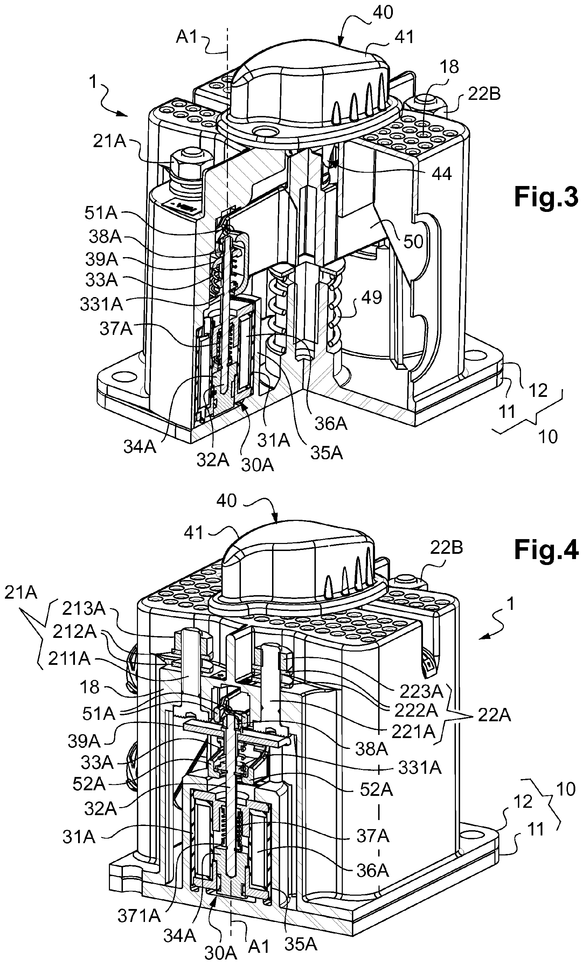

Comme le montre plus particulièrement la figure 4, chaque borne fixe 21A, 22A est ici formée d'un ensemble métallique comportant une vis 211A, 221A, deux rondelles 212A, 222A et un écrou 213A, 223A.

Chaque vis 211A, 221A est engagée dans un trou pratiqué au travers de la paroi frontale 18 du capot 12, au niveau de l'une des parties latérales 15 du capot 12. Elle y est engagée par l'arrière, de telle manière que sa tête prenne appui à l'arrière de cette paroi frontale 18 et que son corps fileté émerge à l'avant de la paroi frontale 18.

Les deux rondelles 212A, 222A sont engagées sur le corps fileté de la vis, à l'avant de la paroi frontale 18, de telle manière qu'elles peuvent prendre en sandwich une rondelle équipant l'extrémité d'un câble électrique conventionnel.

L'écrou 213A, 223A est quant à lui vissé par-dessus ces rondelles 212A, 222A, pour les bloquer rigidement.

Comme le montre la figure 2, le pont mobile 39A est logé dans le boîtier 10 et est prévu pour simultanément s'appuyer, en position de fermeture, contre les têtes des vis 211A, 221A des deux bornes fixes 21A, 22A.

Il se présente ici sous la forme d'une plaque rectangulaire en métal conducteur (typiquement en cuivre), dont les deux bords latéraux sont repliés vers l'arrière.

Le pont mobile 39A présente une face avant plane, dont les longueur et largeur sont suffisantes pour lui permettre de s'appuyer sur les faces arrière des têtes des vis 211A, 221A des deux bornes fixes 21A, 22A.

Le système de commande électromagnétique 31A ici utilisé est décrit dans le brevet FR2899721. Il s'agit plus particulièrement de celui représenté sur la figure 1 de ce brevet FR2899721.

Ce système de commande électromagnétique 31A ne sera donc pas ici décrit en détail.

On rappellera seulement, en référence aux figures 3 et 4, qu'il comporte une carcasse 35A, un noyau 34A en matériau magnétique qui est monté mobile en translation selon un axe principal A1 dans la carcasse 35A, et une bobine 36A qui est logée dans la carcasse 35A, qui entoure ledit noyau 34A et qui est destinée à être alimentée en courant électrique pour générer un champ magnétique engendrant un effort de traction sur le noyau 34A.

La carcasse 35A est fixée sur le socle 11, ici grâce à des cloisons qui s'élèvent à l'avant du socle 11 et qui la maintiennent en position.

Le système de commande électromagnétique 31A comporte également un arbre mobile 32A dont l'extrémité arrière est engagée dans un trou borgne prévu dans le noyau 34A de manière à pouvoir coulisser dans celui-ci selon l'axe principal A1, et dont l'extrémité avant est accouplée au pont mobile 39A.

Pour maintenir l'extrémité arrière de l'arbre mobile 32A en appui axial contre le fond du trou borgne du noyau 34A, il est prévu un premier ressort de compression 37A qui est enfilé sur l'arbre mobile 32A et qui est précontraint entre la carcasse 35A et une première butée 371A prévue sur l'arbre mobile 32A. Ce premier ressort de compression 37A permet donc de pousser l'arbre mobile 32A vers l'arrière. Ce premier ressort de compression sera appelé dans la suite de cet exposé « ressort arrière 37A ».

Pour accoupler l'extrémité avant de l'arbre mobile 32A au pont mobile 39A, il est prévu au centre du pont mobile 39A une ouverture qui est enfilée librement sur l'arbre mobile 32A de manière que le pont mobile 39A puisse coulisser sur celui-ci selon l'axe principal A1.

Il est également prévu un second ressort de compression 33A qui est enfilé sur l'arbre mobile 32A, et qui est précontraint entre le pont mobile 39A, 39B et une seconde butée 331A prévue sur l'arbre mobile 32A. Ce second ressort de compression 33A permet donc de pousser le pont mobile 39A, 39B vers l'avant, contre une troisième butée 38A prévue à l'extrémité avant de l'arbre mobile 32A. Ce second ressort de compression 33A sera appelé dans la suite de cet exposé « ressort avant 33A ».

Un système de cames (non visible sur les figures) permet, lorsqu'aucun courant n'alimente la bobine 36A, de maintenir le noyau 34A dans l'une ou l'autre de deux positions stables situées à des hauteurs différentes, et, lorsqu'un courant alimente la bobine 36A, de déplacer le noyau 34A de l'une à l'autre de ces deux positions stables.

Ces deux positions stables correspondent à l'état fermé et ouvert du système de commande électromagnétique 31A.

Il est alors prévu des moyens de pilotage permettant de faire circuler le courant électrique dans la bobine 36A afin de placer le noyau 34A dans l'une ou l'autre de ses deux positions stables.

Ces moyens de pilotage, qui ne font pas en propre l'objet de la présente invention, ne seront pas décrits en détail. On exposera seulement qu'ils comportent une carte électronique (non représentée) logée dans le boîtier 10, ainsi que un ou deux connecteurs 90 (comme cela apparaît sur la figure 1) qui font saillie de la paroi latérale du capot 12 et qui permettent de piloter électroniquement les systèmes de commande électromagnétique 31A, 31B depuis l'extérieur du coupe-circuit 1.

Les moyens de manoeuvre manuelle 40, qui sont manoeuvrables entre la position fonctionnelle (ou position AUTO), la position d'ouverture forcée (ou position OFF) et la position de fermeture forcée (ou position ON), sont ici préférentiellement adaptés à agir simultanément sur les deux ponts mobiles 39A, 39B.

Ils sont ainsi prévus pour :
- en position fonctionnelle, laisser les deux ponts mobiles 39A, 39B libres en translation selon l'axe principal A1,
- en position d'ouverture forcée, maintenir les deux ponts mobiles 39A, 39B à distance des bornes fixes 21A, 22A, 21B, 22B et,
- en position de fermeture forcée, bloquer les deux ponts mobiles 39A, 39B contre les bornes fixes 21A, 22A, 21B, 22B.

Ils permettent donc, en position d'ouverture forcée, d'isoler la batterie d'accumulateurs tant du côté de sa borne négative que du côté de sa borne positive.

Comme cela apparaît bien sur les figures 2 et 5, ces moyens de manoeuvre manuelle 40 comportent une poignée 41 qui est accessible à l'usager et qui est mobile en rotation par rapport au boîtier 10, une fourchette 50 qui est mobile en translation par rapport au boîtier 10 et qui permet d'agir simultanément sur les deux ponts mobiles 39A, 39B, et des moyens de conversion du mouvement 44 qui sont adaptés à convertir le mouvement de rotation de la poignée 41 en mouvement de translation de la fourchette 42.

La poignée 41 comporte une embase 411 plane, sur la face avant de laquelle s'élève un renflement 412 dont la forme en S permet d'en faciliter la manoeuvre.

La poignée 41 comporte par ailleurs, à l'arrière de son embase 411, un arbre 45 tubulaire de révolution autour d'un axe central A2 parallèle à l'axe principal A1. La poignée 41 est montée mobile en rotation sur le boîtier 10 autour de cet axe central A2 grâce à cet arbre 45 qui est engagé librement au travers d'une ouverture prévue en correspondance dans la paroi frontale 18 du capot 12.

Comme le montre la figure 5, cet arbre 45 présente, à distance de la face arrière de l'embase 411, une collerette 451 qui prend appui contre la face arrière de la paroi frontale 18 alors que l'embase 411 prend appui contre la face avant de la paroi frontale 18, ce qui permet de bloquer en translation la poignée 41 selon l'axe central A2.

Comme le montrent les figures 2 et 5, la fourchette 50 comporte une poutrelle 53 et un arbre de guidage 54.

La poutrelle 53 s'étend en longueur radialement par rapport à l'axe central A2, entre les deux moyens de connexion et déconnexion 30A, 30B.

L'arbre de guidage 54 s'étend à partir du centre de la face arrière de la poutrelle 53, orthogonalement à celle-ci, pour former avec celle-ci un T.

Cet arbre de guidage 54 est engagé coulissant dans un manchon 19 qui s'élève à partir du centre de la face avant du socle 11 du boîtier 10. Il permet de guider la fourchette 50 en translation selon l'axe central A2, vers l'avant ou vers l'arrière.

Comme le montre la figure 2, la poutrelle 53 présente, à chacune de ses extrémités, deux bras avant 51A et arrière 52A qui sont respectivement situés à l'avant et à l'arrière du pont mobile 39A.

Chacun de ces deux bras avant 51A et arrière 52A est formé de deux doigts qui s'étendent de part et d'autre de l'arbre mobile 32A, 32B pour ne pas interférer avec celui-ci.

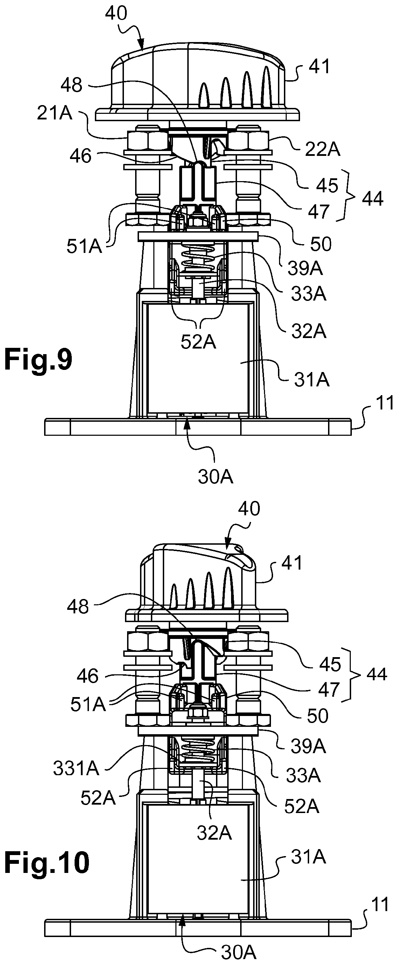

Comme le montre la figure 9, les deux doigts de chaque bras avant 51A de la fourchette 50 sont prévus pour s'appliquer contre les faces supérieures des ponts mobiles 39A afin de les bloquer à distance des bornes fixes 21A, 22A lorsque les moyens de manoeuvre 40 sont en position d'ouverture forcée.

Comme le montre la figure 10, les deux doigts de chaque bras arrière 52A de la fourchette 50 sont prévus pour s'appliquer sous les secondes butées 331A des arbres mobiles 32A (à savoir celles contre lesquelles s'appuient les ressorts avant 33A) afin de maintenir les ponts mobiles 39A contre les bornes fixes 21A, 22A lorsque les moyens de manoeuvre 40 sont en position de fermeture forcée.

Comme le montre la figure 5, les moyens de conversion du mouvement 44, qui permettent de faire coulisser la fourchette 50 à la faveur de la rotation de la poignée 41, comportent une came 46 et un arbre à ergot 47.

Ici, le profil de la came 46 est formé par le bord arrière de l'arbre 45. Ce profil de came 46 présente trois sièges 461, 462, 463 situés à différentes hauteurs par rapport à l'embase 411.

En pratique, il est prévu ici deux cames 46 à trois sièges 461, 462, 463, qui s'étendent chacune sur un secteur angulaire autour de l'axe central A2 qui est inférieur à 180 degrés.

La figure 6 représente le développé en plan de l'un de ces profils de came 46. On y observe que les trois sièges 461, 462, 463 sont formés par trois encoches semi-circulaires, séparées les unes des autres par des rampes inclinées 464, 465. Ce profil de came 46 est bordé par deux bords droits 466, 467 ayant des fonctions de butée angulaire.

Comme le montrent les figures 2 et 5, l'arbre à ergot 47 comporte en correspondance deux ergots 48 qui sont situés à l'opposés l'un de l'autre par rapport à l'axe central A2 et qui sont adaptés à naviguer le long de ces deux profils de came 46.

En pratique, cet arbre à ergot 47 s'élève à partir de la face avant de la poutrelle 53 de la fourchette 50, selon l'axe central A2. Il vient d'une seule pièce avec cette fourchette 50.

Il présente une section transversale à cet axe central A2 en forme de croix. Il est donc formé de quatre parois placées en croix. Deux premières parois opposées s'étendent sur une hauteur supérieure à celle des deux autres parois. Les bords avant de ces deux premières parois sont conçus pour venir au contact des deux profils de came 46 et forment ainsi lesdits ergots 48, tandis que les bords avant des deux autres parois sont situés plus à l'arrière pour ne pas venir au contact des profils de came 46.

De cette manière, les ergots 48 sont adaptés à naviguer d'un siège 461, 462, 463 à l'autre lorsque l'usager manoeuvre la poignée 41. Ils ne peuvent en revanche pas naviguer d'un profil de came 46 à l'autre, du fait des bords droits 466, 467 qui forment des butées pour les deux premières parois.

Comme le montrent les figures 2 et 5, il est par ailleurs prévu des moyens élastiques 49 de rappel des ergots 48 contre les profils de came 46. Ici, ces moyens de rappel élastiques sont formés par un ressort de compression 49 qui est enfilé sur le manchon 19 du socle 11, et qui est précontraint entre ce socle 11 et la face arrière de la poutrelle 53 de la fourchette 50, de manière à repousser cette dernière vers l'avant.

Ce ressort de compression 49 sera appelé dans la suite de cet exposé « ressort principal 49 ».

Il délivre, une fois précontraint, un effort strictement supérieur à la somme des efforts délivrés par les ressorts avant 33A et arrière 37A, de manière à pouvoir exercer sur les deux ponts mobiles 39A, 39B des efforts supérieurs aux efforts exercés par les ressorts avant 33A et arrière 37A lorsque les moyens de manoeuvre manuelle 40 sont en position de fermeture forcée et que les systèmes de commande électromagnétique 31A, 31B sont à l'état ouvert.

Enfin, le coupe-circuit 1 comporte des moyens de verrouillage 60 des moyens de manoeuvre manuelle 40 en position d'ouverture forcée.

Ces moyens de verrouillage 60 sont conçus pour interdire toute manipulation des moyens de manoeuvre manuelle 40 par un tiers lorsque l'usager ne le souhaite pas, par exemple parce qu'il intervient sur la batterie d'accumulateurs du véhicule ou sur les organes électriques de ce véhicule.

Ici, comme le montre la figure 1, ces moyens de verrouillage 60 comportent une ouverture 61 située dans l'embase 411 de la poignée 41 et une rainure rectiligne 62 qui est située en creux dans la face avant de la paroi frontale 18 du capot 12 du boîtier 10.

Cette rainure rectiligne 62 présente une extrémité située sous l'ouverture 61 lorsque les moyens de manoeuvre manuelle 40 sont en position d'ouverture forcée, et une extrémité opposée qui débouche sur le côté du capot 12.

Ces moyens de verrouillage 60 permettent ainsi à l'usager de positionner un cadenas au travers de la poignée 41 et le long de la rainure rectiligne 62, ce qui empêche ensuite toute rotation de la poignée 41 par rapport au boîtier 10.

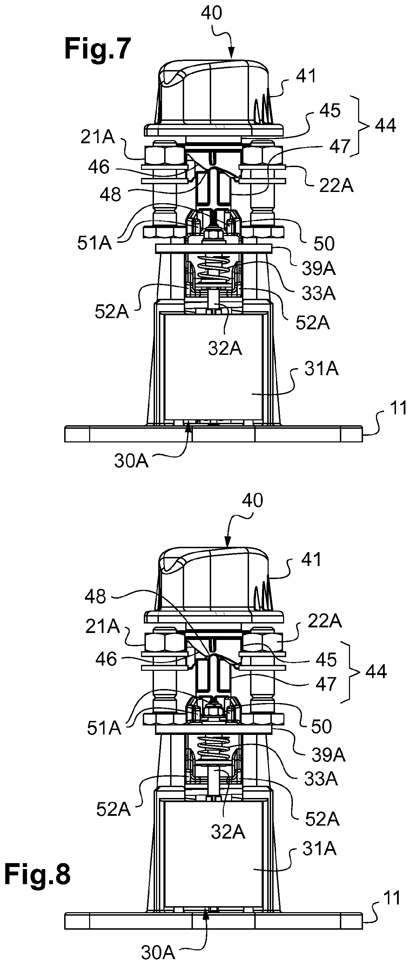

Sur les figures 7 à 13, on a représenté les différentes configurations stables que peut prendre le coupe-circuit 1.

Sur la figure 12, la poignée 41 est positionnée de telle manière que les moyens de manoeuvre manuelle 40 sont en position fonctionnelle.

Dans cette position, les ergots 48 se placent sur les sièges 462 des cames 46, ceux situés à mi-chemin des profils de came 46.

Alors, comme le montre la figure 7, lorsque le système de commande électromagnétique 31A est piloté à l'état ouvert, le ressort arrière 37A ramène l'arbre mobile 32A vers l'arrière, ce qui permet de placer le pont mobile 39A à distance des bornes fixes 21A, 22A.

Comme le montre la figure 8, lorsque le système de commande électromagnétique 31A est piloté à l'état fermé, l'arbre mobile 32A est poussé vers l'avant, ce qui permet de plaquer le pont mobile 39A contre les bornes fixes 21A, 22A.

Sur la figure 11, la poignée 41 est positionnée de telle manière que les moyens de manoeuvre manuelle 40 sont en position de fermeture forcée.

Dans cette position, les ergots 48 se placent sur les sièges 461 des cames 46, ceux situés les plus à l'avant.

Comme le montre la figure 10, les bras arrière 52A de la fourchette 50 tirent alors la seconde butée 331A vers l'avant, ce qui comprime le ressort avant 33A et force le pont mobile 39A à s'appuyer contre les bornes fixes 21A, 22A.

Alors, si le système de commande électromagnétique 31A est piloté à l'état ouvert, l'arbre mobile 32A va venir s'écarter du fond du logement du noyau 34A, en comprimant le ressort arrière 37A.

Au contraire, si le système de commande électromagnétique 31A est piloté à l'état fermé, le noyau 34A va remonter et pousser l'arbre mobile 32A vers l'avant, de sorte qu'il participera au blocage du pont mobile 39A contre les bornes fixes 21A, 22A.

Dans cette position, l'état des systèmes de commande électromagnétique 31A, 31B n'aura donc pas d'impact sur la position des ponts mobiles 39A, 39B. Ainsi, il sera possible de fermer manuellement le circuit électrique entre les bornes fixes en cas de problème électrique affectant le pilotage des systèmes de commande électromagnétique 31A, 31B, ou en cas de problème mécanique affectant le fonctionnement des systèmes de commande électromagnétique 31A, 31B (notamment car les tiges mobiles ne sont pas liées rigidement aux noyaux mais sont montées mobiles par rapport à ces derniers).

Sur la figure 13, la poignée 41 est positionnée de telle manière que les moyens de manoeuvre manuelle 40 sont en position d'ouverture forcée.

Dans cette position, les ergots 48 se placent sur les sièges 463 des cames 46, ceux situés les plus à l'arrière.

Comme le montre la figure 9, les bras avant 51A de la fourchette 50 poussent alors les ponts mobiles 39A, 39B vers l'arrière, à distance des bornes fixes.

Alors, si le système de commande électromagnétique 31A est piloté à l'état fermé, le ressort avant 33A va se comprimer pour permettre à l'arbre mobile 32A de remonter.

Au contraire, si le système de commande électromagnétique 31A est piloté à l'état ouvert, l'arbre mobile 32A va descendre et participer au blocage du pont mobile 39A à distance des bornes fixes 21A, 22A.

Dans cette position, l'état des systèmes de commande électromagnétique 31A, 31B n'aura donc pas d'impact sur la position des ponts mobiles 39A, 39B.

La présente invention n'est nullement limitée aux modes de réalisation décrits et représentés, mais l'homme du métier saura y apporter toute variante conforme à son esprit.

En particulier, on pourrait prévoir que le pont mobile soit monté sur charnière dans le boîtier, pour basculer entre une position au contact des bornes fixes et une position à distance des bornes fixes.

Selon une autre variante, le système de commande électromagnétique pourrait être d'un autre type. Il pourrait ainsi se présenter sous la forme d'un électro-aimant bistable, auquel cas il ne sera pas besoin d'utiliser de ressorts avant et arrière pour permettre à la fourchette de déplacer le pont mobile à l'encontre de l'effort exercé par l'électro-aimant.

Selon une autre variante, les moyens de manoeuvre manuelle pourraient comporter, non pas une poignée mais plutôt un levier qui serait monté à translation sur le boîtier et serait fixé à la fourchette.

Selon une variante de réalisation du coupe-circuit représenté sur les figures, les moyens de manoeuvre manuelle pourraient être adaptés à n'agir que sur l'un des deux ponts mobile, la position de l'autre pont ne dépendant alors que de l'état ouvert ou fermé de son système de commande électromagnétique.

Encore en variante, on pourrait connecter le coupe-circuit autrement. Ainsi, on pourrait prévoir de connecter une première paire de bornes fixes du coupe-circuit entre la borne positive d'une première batterie (par exemple à 12 Volt) et la borne positive d'un premier organe électrique, et de connecter la seconde paire de bornes fixes du coupe-circuit entre la borne positive d'une seconde batterie (par exemple à 24 Volt) et la borne positive d'un second organe électrique (préférentiellement distinct du premier organe électrique).

## Revendications

1. Dispositif de coupure électrique (1) comportant :
- deux bornes fixes (21A, 22A, 21B, 22B) de connexion électrique,
- un pont mobile (39A, 39B) qui est mobile entre une position de fermeture du contact électrique entre les bornes fixes (21A, 22A, 21B, 22B) et une position d'ouverture du contact électrique entre les bornes fixes (21A, 22A, 21B, 22B),
- un système de commande électromagnétique (31A) qui est adapté à être piloté entre un état ouvert dans lequel il commande le placement du pont mobile (39A, 39B) en position d'ouverture et un état fermé dans lequel il commande le placement du pont mobile (39A, 39B) en position de fermeture, et
- des moyens de manoeuvre manuelle (40) qui comportent une poignée (41) mobile en rotation et qui sont manoeuvrables entre, d'une part, une position fonctionnelle dans laquelle ils laissent le pont mobile (39A, 39B) libre de se déplacer entre ses positions d'ouverture et de fermeture en fonction de l'état ouvert ou fermé du système de commande électromagnétique (31A), et, d'autre part, une position d'ouverture forcée dans laquelle ils maintiennent le pont mobile (39A, 39B) à distance des deux bornes fixes (21A, 22A, 21B, 22B) quel que soit l'état ouvert ou fermé du système de commande électromagnétique (31A),
**caractérisé en ce que** lesdits moyens de manoeuvre manuelle (40) sont également manoeuvrables vers une position de fermeture forcée dans laquelle ils maintiennent le pont mobile (39A, 39B) au contact des deux bornes fixes (21A, 22A, 21B, 22B) quel que soit l'état ouvert ou fermé du système de commande électromagnétique (31A), et
**en ce que** les moyens de manoeuvre manuelle (40) comportent une fourchette (50) mobile en translation qui comprend deux bras (51A, 52A, 51B, 52B) adaptés à maintenir le pont mobile (39A, 39B) respectivement au contact et à distance des deux bornes fixes (21A, 22A, 21B, 22B), et des moyens de conversion du mouvement (44) adaptés à convertir le mouvement de rotation de la poignée (41) en mouvement de translation de la fourchette (42).

2. Dispositif de coupure électrique (1) selon la revendication précédente, dans lequel il est prévu deux paires de bornes fixes (21A, 22A, 21B, 22B), deux ponts mobiles (39A, 39B) qui sont respectivement adaptés à fermer le contact électrique entre les bornes fixes (21A, 22A, 21B, 22B) de chaque paire, et deux systèmes de commande électromagnétique (31A) qui sont respectivement adaptés à déplacer les deux ponts mobiles (39A, 39B), et dans lequel lesdits moyens de manoeuvre manuelle (40) sont adaptés à maintenir au moins l'une des deux ponts mobiles (39A, 39B) au contact des deux bornes fixes (21A, 22A, 21B, 22B).

3. Dispositif de coupure électrique (1) selon la revendication précédente, dans lequel, en position d'ouverture forcée, les moyens de manoeuvre manuelle (40) maintiennent simultanément les deux ponts mobiles (39A, 39B) à distance des bornes fixes (21A, 22A, 21B, 22B), et, en position de fermeture forcée, les moyens de manoeuvre manuelle (40) bloquent respectivement les deux ponts mobiles (39A, 39B) au contact des bornes fixes (21A, 22A, 21B, 22B) de chaque paire.

4. Dispositif de coupure électrique (1) selon la revendication précédente, dans lequel la fourchette (50) comporte deux paires de bras (51A, 52A, 51B, 52B) respectivement adaptées à maintenir les deux ponts mobiles (39A, 39B) au contact et à distance des quatre bornes fixes (21A, 22A, 21B, 22B).

5. Dispositif de coupure électrique (1) selon l'une des revendications précédentes, dans lequel les moyens de conversion du mouvement (44) comportent une came (46) dont le profil présente au moins trois sièges (461, 462, 463), un arbre à ergot (47) qui est formé d'une seule pièce avec la fourchette (50) et qui comporte au moins un ergot (48) adapté à naviguer le long du profil de la came (46), et des moyens élastiques (49) de rappel de l'ergot (48) contre le profil de la came (46).

6. Dispositif de coupure électrique (1) selon l'une des revendications précédentes, dans lequel le système de commande électromagnétique (31A) comporte un noyau (34A) en matériau magnétique qui est monté mobile dans une carcasse (35A), une bobine (36A) qui entoure ledit noyau (34A) et qui est destinée à être alimentée en courant électrique pour générer un champ magnétique engendrant un effort de traction dudit noyau (34A), un arbre mobile (32A) qui est en appui axial contre le noyau (34A) et qui est accouplé audit pont mobile (39A, 39B), et un premier moyen de rappel élastique (37A) pour pousser l'arbre mobile (32A) vers l'arrière, contre le noyau (34A).

7. Dispositif de coupure électrique (1) selon la revendication précédente, dans lequel le pont mobile (39A, 39B) étant enfilé librement sur l'arbre mobile (32A), il est prévu un second moyen de rappel élastique (33A) pour pousser le pont mobile (39A, 39B) vers l'avant, contre une butée prévue sur l'arbre mobile (32A).

8. Dispositif de coupure électrique (1) selon l'une des revendications précédentes, dans lequel il est prévu des moyens de verrouillage (60) des moyens de manoeuvre manuelle (40) en position d'ouverture forcée.

9. Dispositif de coupure électrique (1) selon la revendication précédente, dans lequel il est prévu un boîtier (10) qui loge le pont mobile (39A, 39B) et le système de commande électromagnétique (31A), dans lequel les moyens de manoeuvre manuelle (40) comportent une poignée (41), et dans lequel lesdits moyens de verrouillage (60) comportent une ouverture (61) située dans la poignée (41) et une cavité (62) qui est située en creux dans le boîtier (10), dans l'axe de ladite ouverture (61) lorsque les moyens de manoeuvre manuelle (40) sont en position d'ouverture forcée.

## Patentansprüche

1. Elektrische Abschaltvorrichtung (1) mit
- zwei festen Anschlüssen (21A, 22A, 21B, 22B) für elektrischen Anschluß,
- einer beweglichen Brücke (39A, 39B), die zwischen einer Stellung des geschlossenen elektrischen Kontakts zwischen den festen Anschlüssen (21A, 22A, 21B, 22B) und einer Stellung des geöffneten elektrischen Kontakts zwischen den festen Anschlüssen (21A, 22A, 21B, 22B) bewegbar ist,
- einem elektromagnetischen Steuerungssystem (31A), das dazu ausgelegt ist, zwischen einem geöffneten Zustand, in dem es das Verlagern der beweglichen Brücke (39A, 39B) in die geöffnete Stellung bewirkt, und einem geschlossenen Zustand, in dem es das Verlagern der beweglichen Brücke (39A, 39B) in die geschlossene Stellung bewirkt, gesteuert zu werden, und
- manuellen Betätigungsmitteln (40), die einen drehbaren Griff (41) aufweisen und die zwischen einer Betriebsstellung, in der sie die bewegliche Brücke (39A, 39B) in Abhängigkeit vom geöffneten oder geschlossenen Zustand des elektromagnetischen Steuerungssystems (31A) sich frei zwischen deren geöffneter oder geschlossener Stellung bewegen lassen, einerseits, und einer erzwungenen Öffnungsstellung, in der sie die bewegliche Brücke (39A, 39B) unabhängig vom geöffneten oder geschlossenen Zustand des elektromagnetischen Steuerungssystems (31A) in einem Abstand zu den beiden festen Anschlüssen (21A, 22A, 21B, 22B) halten, andererseits, betätigbar sind,
**dadurch gekennzeichnet, daß** die manuellen Betätigungsmittel (40) ebenfalls in eine erzwungene geschlossene Stellung bringbar sind, in der sie die bewegliche Brücke (39A, 39B) mit den beiden festen Anschlüssen (21A, 22A, 21B, 22B) in Kontakt halten, ganz gleich, ob sich das elektromagnetische Steuerungssystem (31A) in offenem oder geschlossenem Zustand befindet, und
daß die manuellen Betätigungsmittel (40) eine translatorisch bewegbare Gabel (50), die zwei Arme (51A, 52A, 51B, 52B) aufweist, die dazu ausgelegt sind, die bewegliche Brücke (39A, 39B) in Kontakt mit bzw. getrennt von den beiden festen Anschlüssen (21A, 22A, 21B, 22B) zu halten, und Mittel (44) zum Umwandeln der Drehbewegung des Griffs (41) in eine translatorische Bewegung der Gabel (42) aufweisen.

2. Elektrische Abschaltvorrichtung (1) gemäß dem vorangehenden Anspruch, bei der zwei Paar feste Anschlüsse (21A, 22A, 21B, 22B), zwei bewegliche Brücken (39A, 39B), die dazu ausgelegt sind, den elektrischen Kontakt zwischen den festen Anschlüssen (21A, 22A, 21B, 22B) jedes Paars zu schließen, und zwei elektromagnetische Steuerungssysteme (31A), die jeweils dazu ausgelegt sind, die beiden beweglichen Brücken (39A, 39B) zu bewegen, vorgesehen sind, und bei der die manuellen Betätigungsmittel (40) dazu ausgelegt sind, wenigstens eine der beiden beweglichen Brücken (39A, 39B) mit den beiden festen Anschlüssen (21A, 22A, 21B, 22B) in Kontakt zu halten.

3. Elektrische Abschaltvorrichtung (1) gemäß dem vorangehenden Anspruch, bei der die manuellen Betätigungsmittel (40) in der erzwungenen Öffnungsstellung die beiden beweglichen Brücken (39A, 39B) gleichzeitig im Abstand zu den festen Anschlüssen (21A, 22A, 21B, 22B) halten und die manuellen Betätigungsmittel (40) in der erzwungenen Betriebsstellung die beiden beweglichen Brücken (39A, 39B) jeweils in Kontakt mit den festen Anschlüssen (21A, 22A, 21B, 22B) jedes Paars halten.

4. Elektrische Abschaltvorrichtung (1) gemäß dem vorangehenden Anspruch, bei der die Gabel (50) zwei Paar Arme (51A, 52A, 51B, 52B) aufweist, die jeweils dazu ausgelegt sind, die beiden beweglichen Brücken (39A, 39B) in Kontakt mit bzw. getrennt von den vier festen Anschlüssen (21A, 22A, 21B, 22B) zu halten.

5. Elektrische Abschaltvorrichtung (1) gemäß einem der vorangehenden Ansprüche, bei der die Mittel (44) zur Umwandlung der Bewegung einen Nocken (46), dessen Profil wenigstens drei Sitze (461, 462, 463) aufweist, eine Stiftwelle (47), die mit der Gabel (50) einstückig gefertigt ist und die wenigstens einen Stift (48) aufweist, der dazu ausgelegt ist, am Profil des Nocken entlang zu laufen, und elastische Mittel (49) zum Rückstellen des Stifts (48) an das Profil der Nocke (46) aufweisen.

6. Elektrische Abschaltvorrichtung (1) gemäß einem der vorangehenden Ansprüche, bei der das elektromagnetische Steuerungssystem (31A) einen Kern (34A) aus magnetischem Material, der in einem Gehäuse (35A) beweglich montiert ist, eine Spule (36A), die den Kern (34A) umgibt und dazu bestimmt ist, mit elektrischem Strom versorgt zu werden, um ein Magnetfeld zu erzeugen, das eine Kraft zum Ziehen des Kerns (34A) erzeugt, eine bewegliche Welle (32A), die am Kern (34A) axial anliegt und die mit der beweglichen Brücke (39A, 39B) verbunden ist, und ein erstes elastisches Rückstellmittel (37A) zum Zurückstoßen der beweglichen Welle (32A) gegen den Kern (34A) aufweist.

7. Elektrische Abschaltvorrichtung (1) gemäß dem vorangehenden Anspruch, bei der die bewegliche Brücke (39A, 39B) frei auf die bewegliche Welle (32A) aufgeschoben ist und ein zweites elastisches Rückstellmittel (33A) zum Nachvornestoßen der beweglichen Brücke (39A, 39B) gegen einen auf der beweglichen Welle (32A) vorgesehenen Anschlag vorgesehen ist.

8. Elektrische Abschaltvorrichtung (1) gemäß einem der vorangehenden Ansprüche, bei der Mittel (60) zum Verriegeln der manuellen Betätigungsmittel (40) in der erzwungenen Öffnungsstellung vorgesehen sind.

9. Elektrische Abschaltvorrichtung (1) gemäß dem vorangehenden Anspruch, bei der ein Gehäuse (10) vorgesehen ist, in dem die bewegliche Brücke (39A, 39B) und das elektromagnetische Steuerungssystem (31A) untergebracht sind, bei der die manuellen Betätigungsmittel (40) einen Griff (41) aufweisen, und bei der die Verriegelungsmittel (60) eine im Griff (41) angeordnete Öffnung (61) und einen Hohlraum (62), der im Gehäuse (10) auf der Achse der Öffnung (61) als Aushöhlung angeordnet ist, wenn die manuellen Betätigungsmittel (40) in der erzwungenen Öffnungsstellung sind, aufweisen.

## Claims

1. An electrical disconnect device (1), comprising:
• a pair of stationary electrical connection terminals (21A, 22A; 21B, 22B);
• a movable bridge (39A, 39B) that is movable between a closed position for making electrical contact between the pair of stationary terminals (21A, 22A; 21B, 22B), and an open position for breaking electrical contact between the pair of stationary terminals (21A, 22A; 21B, 22B);
• an electromagnetic control system (31A, 31B) that is adapted to be switched between an open state in which it causes the movable bridge to be positioned (39A, 39B) in its open position, and a closed state in which it causes the movable bridge to be positioned (39A, 39B) in its closed position; and
• manual drive means (40) that comprise a knob movable in turning and that are drivable between firstly an operational position in which they allow the movable bridge (39A, 39B) to move freely between its open and closed positions as a function of the open or closed state of the electromagnetic control system (31A, 31B), and secondly a forced-open position in which they hold the movable bridge (39A, 39B) spaced apart from the pair of stationary terminals (21A, 22A; 21B, 22B), regardless of the open or closed state of the electromagnetic control system (31A);
the electrical disconnect device being **characterized in that** said manual drive means (40) are also drivable towards a forced-closed position in which they hold the movable bridge (39A, 39B) in contact with the pair of stationary terminals (21A, 22A; 21B, 22B), regardless of the open or closed state of the electromagnetic control system (31A), and
**in that** the manual drive means comprise a fork that is movable in translation and that includes two pairs of arms that are adapted to hold the movable bridge respectively in contact with, and spaced apart from, the pairs of stationary terminals, and movement conversion means that are adapted to convert the turning movement of the knob into movement in translation of the fork.

2. An electrical disconnect device (1) according to the preceding claim, wherein there are provided: two pairs of stationary terminals (21A, 22A; 21B, 22B); two movable bridges (39A, 39B) that are adapted to make electrical contact between the respective pairs of stationary terminals (21A, 22A; 21B, 22B); and two electromagnetic control systems (31A, 31B) that are adapted to move the two movable bridges (39A, 39B) respectively; and wherein said manual drive means (40) are adapted to hold at least one of the two movable bridges (39A, 39B) in contact with the respective pair of stationary terminals (21A, 22A; 21B, 22B).

3. An electrical disconnect device (1) according to the preceding claim, wherein, in the forced-open position, the manual drive means (40) simultaneously hold the two movable bridges (39A, 39B) spaced apart from the respective pairs of stationary terminals (21A, 22A; 21B, 22B), and in the forced-closed position, the manual drive means (40) block the two movable bridges (39A, 39B) in contact with the respective pairs of stationary terminals (21A, 22A; 21B, 22B).

4. An electrical disconnect device (1) according to the preceding claim, wherein the fork (50) includes two pairs of arms (51A, 52A; 51B, 52B) respectively adapted to hold the two movable bridges (39A, 39B) in contact with, and spaced apart from, the two pairs of stationary terminals (21A, 22A; 21B, 22B).

5. An electrical disconnect device (1) according to any one of the preceding claims, wherein the movement conversion means (44) comprise a cam (46) having a profile that presents at least three seats (461, 462, 463), a lug shaft (47) that is formed integrally with the fork (50) and that includes at least one lug (48) that is adapted to travel along the profile of the cam (46), and resilient return means (49) for returning the lug (48) against the profile of the cam (46).

6. An electrical disconnect device (1) according to any preceding claim, wherein the electromagnetic control system (31A) comprises a core (34A) that is made of magnetic material and that is mounted to move in a body (35A), a coil (36A) that surrounds said core (34A) and that is adapted to receive an electrical current so as to generate a magnetic field that delivers a traction force on said core (34A), a movable shaft (32A) that bears axially against the core (34A) and that is coupled to said movable bridge (39A, 39B), and first resilient return means (37A) for pushing the movable shaft (32A) towards the rear, against the core (34A).

7. An electrical disconnect device (1) according to the preceding claim, wherein the movable bridge (39A, 39B) is engaged around the movable shaft (32A), and second resilient return means (33A) are provided for pushing the movable bridge (39A, 39B) towards the front, against an abutment provided on the movable shaft (32A).

8. An electrical disconnect device (1) according to any preceding claim, wherein locking means (60) are provided for locking the manual drive means (40) in the forced-open position.

9. An electrical disconnect device (1) according to the preceding claim, wherein a casing (10) is provided that houses the movable bridge (39A, 39B) and the electromagnetic control system (31A), wherein the manual drive means (40) comprise a knob (41), and wherein said locking means (60) comprise an opening (61) that is situated in the knob (41), and a cavity groove elsewhere (62) that is situated recessed into the casing (10), in the axis of said opening (61) when the manual drive means (40) are in the forced-open position.
